# EUROPEAN PATENT APPLICATION

(11) **EP 0 949 578 A2**
(43) Date of publication of application: **13.10.1999**
(21) Application number: 99250107.2
(22) Date of filing: 08.04.1999
(51) Int. Cl.: G06K 9/00

(54) **Input device and method utilizing fingerprints of a user**

(30) Priority: 08.04.1998 JP 9580098
(71) Applicant: NEC CORPORATION, Tokyo (JP)
(72) Inventor: Sugiura, Atsushi, Minato-ku, Tokyo (JP)
(74) Representative: Patentanwälte Wenzel & Kalkoff

(57) **Abstract**

In an input device (10) used for operating a system (16) and adapted to fingers of a user, a fingerprint identifying arrangement (13, 14, 17) identifies, as an identified fingerprint, one of fingerprints of the fingers to produce an identification result representative of the identified fingerprint. Responsive to the identification result, a process designating arrangement (14, 15, 17) designates a process to be implemented by the system.

## Description

### Background of the Invention:

The present invention relates to an input device and an input method and, more particularly, to an input device and an input method for operating a computer system, an industrial control machine, a household electric appliance, and others (which will collectively be referred hereinafter as a system).

Hitherto, buttons have been extensively used in such an input device for operating the systems of the foregoing type. For operating computers, a mouse and a keyboard are often used as the input device. The mouse has buttons on its top surface. A user presses or clicks the buttons to supply inputs to operate the computer. The keyboard is an assembly of multiple buttons or keys. The user selects proper buttons for input from among the multiple keys according to his or her needs. Household electric appliances are also provided with many buttons. For instance, a video cassette recorder has, on its front surface or remote control, buttons whereby to issue such commands as "playback", "rewind", and "fast feed" to the video cassette recorder.

Generally, one command is assigned to one button. Hence, a number of n buttons is needed in order to operate a system having the number of n functions, where n is a natural number.

On the other hand , there have conventionally been available input methods or techniques that make it possible to specify a number of m (n < m) different commands by using n buttons, where m is a natural number.

In one of the conventional input techniques, different commands are specified depending on how many times a button is pressed. For example, in the case of the foregoing mouse, clicking a mouse button twice in succession known as "double-clicking" allows two different commands to be given to the computer by using a single button. Likewise, in a cellular phone or a pager, two or more different characters can be entered through a single button by counting how many times the button is pressed. In still another technique in which, if there are multiple buttons, different commands are specified by combinations of the buttons that are simultaneously pressed. For example, if there are n buttons, then a maximum of n square of 2 different commands can be specified.

As another conventional input technique , there is a touch sensitive screen that enables the user to instruct a system to be operated to specify multiple different commands by touching proper areas of the panel screen. In addition to simply touching the screen, gestures on the screen can give a variety of inputting commands.

A first problem in the conventional input techniques is that a large area of the control panel is required to accommodate the number of n buttons, which allows n different commands to be specified. This prevents the size reduction of the equipment incorporating the buttons. Likewise, when a touch sensitive screen is used, a large control panel is also required since it is designed to recognize inputs through different areas touched in the panel. Even if gestures are used for the touch sensitive screen, a certain size of screen area for gestures is required. This means that the foregoing input techniques cannot be used if a system has a limited control screen area.

A second problem in the conventional input techniques is that, when the number of depressions of buttons or the combinations of pressed buttons are used, the operation inevitably becomes complicated and inefficient. Pressing buttons many times or pressing more than one button at the same time is a burden to users.

### Summary of the Invention:

It is therefore an object of the present invention to provide an input device and an input method which utilize fingerprints of a user. It is another object of the present invention to provide an input device and an input method of the type described, which enable multiple commands to be specified even if a control panel of a system is only as large as about the size of a finger cushion.

It is still another object of the present invention to provide an input device and an input method of the type described, which make it possible for the system to recognize multiple types of commands through one user operation without multiple times of button clicks or combinations of button pressing (e.g. one push on a button, or one touch on a touch panel touch sensitive screen) which a user may specify. Other objects of the present invention will become clear as the description proceeds.

According to a first aspect of the present invention, there is provided an input device which comprises fingerprint identifying means for identifying, as an identifying fingerprint, a fingerprint of user's finger which is used in manipulating said input device and process designating means connected to said fingerprint identifying means for notifying a system of a command bound to said identified fingerprint.

According to a second aspect of the present invention, there is provided an input device adapted to determine a finger, which a user has used for operation, by identifying a fingerprint of the finger, and specify processing to be implemented by a system in accordance with an identification result.

According to another aspect of the present invention, there is provided an input device wherein a command is assigned in advance to a fingerprint so as to operate a system, a fingerprint of a user is identified to determine the command assigned to the identified fingerprint, and the determined command is notified to the system.

According to a further aspect of the present invention, there is provided an input device which comprises a fingerprint information storing section for storing fingerprint information on each finger and a command assigned to each finger to operate a system, a fingerprint scanner for reading a fingerprint image of a finger that a user has used for operation, fingerprint identifying means for carrying out matching between a fingerprint image obtained by the fingerprint scanner and fingerprint information stored in the fingerprint information storing section in order to determine the figure that the user has used for the operation, and command notifying means which determines a command that corresponds to the type of finger identified by the fingerprint identifying means by referring to the fingerprint information storing section, and which notifies a target system of the command.

According to another aspect of the present invention, there is provided an input device used for operating a system and adapted to fingers of a user. The input device comprises fingerprint identifying means for identifying, as an identified fingerprint, one of fingerprints of said fingers to produce an identification result representative of said identified fingerprint and process designating means connected to said fingerprint identifying means and responsive to said identification result for designating a process to be implemented by said system.

According to a further aspect of the present invention, there is provided an input method comprising the steps of identifying, as an identified fingerprint, a fingerprint of the user's finger which is used in manipulating said input device and notifying a system of a command bound to said identified fingerprint.

According to another aspect of the present invention, there is provided an input method whereby to determine a finger, which a user has used for operation, by identifying a fingerprint, and to specify processing to be implemented by a system.

According to yet a further aspect of the present invention, there is provided an input method comprising the steps of storing fingerprint information on each finger and a command assigned to each finger to operate a system in a fingerprint information storage device, reading a fingerprint image of a finger that a user has used for operation, carrying out matching between a fingerprint image that has been read and fingerprint information stored in the fingerprint information storage device in order to determine the figure that the user has used for the operation, and determining a command that corresponds to the determined of finger by referring to the storage device, and notifying a target system of the command.

According to another aspect of the present invention, there is provided a method of inputting information to a system with operation by fingers of a user. The method comprises the steps of identifying, as an identified fingerprint, one of fingerprints of said fingers to produce an identification result representative of said identified fingerprint, and designating, in response to said identification result, a process to be implemented by said system.

### Brief Description of the Drawing:

Fig. 1 is a block diagram showing an input device according to an embodiment of the present invention;
Fig. 2 is a correspondence table illustrating an example of data stored in a fingerprint information storing section included in the input device of Fig. 1;
Fig. 3 is a sectional view of an example of a fingerprint scanner included in the input device of Fig. 1;
Fig. 4 is a sectional view of another example of the fingerprint scanner included in the input device of Fig. 1; and
Fig. 5 is a flowchart for describing an operation of the input device of Fig. 1.

### Description of the Preferred Embodiment:

With reference to the drawings, description will be made as regards an input device and an input method according to an embodiment of the present invention.

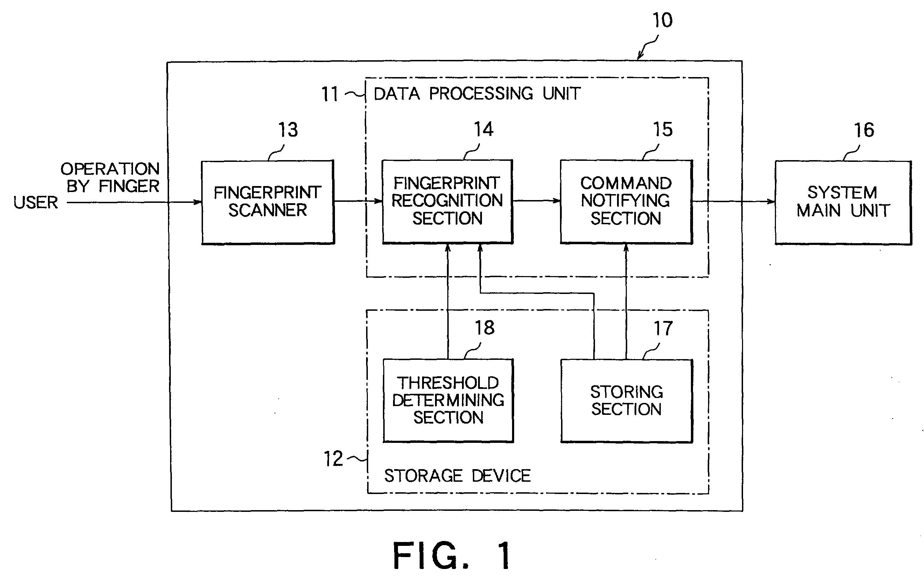

Referring to Fig. 1, the input device is designated by a reference numeral 10 and comprises a data processing unit 11 operated and controlled by using a program, a storage device 12 for storing information, and a finger-print scanner 13. The data processing unit 11 comprises a fingerprint recognition section 14 connected to the fingerprint scanner 13 and a command notifying section 15 connected to the fingerprint recognition section 14 and to a system main unit 16 such as a computer system, an industrial control machine, a household electric appliance, and others. The storage device 12 comprises a storing section 17 and a threshold determining section 18. The storing section 17 is connected to the fingerprint recognition section 14 and the command notifying section 15 and for storing a correspondence table which will presently be described. The threshold determining section 18 is connected to the fingerprint collating section 14 and is for determining a threshold value which will be described, later.

Referring to Fig. 2, the description will be directed to the correspondence table illustrating an example of data stored in the storing section 17. The correspondence table shows fingerprint information or data Pi of each finger Fi (1 <= i <= n) of a user and a command Ci assigned to each finger, and is stored beforehand in the fingerprint storing section 17. The storing section 17 will be referred to as a command assigning arrangement which is for assigning commands in one-to-one correspondence of the fingerprints. Each of the commands is used for operating the system main unit 16.

Each finger Fi denotes the type of finger such as the right hand thumb and the left hand ring finger. Regarding the fingerprint data Pi, such data as image and characteristics required for identification is stored according to the identifying method used by a fingerprint recognition section 14, which will be discussed later. For instance, if the fingerprint recognition section 14 employs the minutiae method, then the structural positional relationship regarding the ending and branching points of fingerprint ridge lines is stored in advance; or if it employs image matching method, then the density patterns of fingerprint images are stored in advance. The command Ci is a command to be issued to a system to which the present invention is applied. For example, if the system to which the invention is applied is capable of sending and receiving electronic messages, then "send messages," "receive messages," or the like correspond to the command Ci.

The fingerprint scanner 13 reads, when a finger of the user touches it, the fingerprint image and converts it into digital image data for the data processing unit 11 to process it. The fingerprint scanner 13 may be of any type as long as it is able to read a fingerprint image when a finger of a user touches it, some of the examples including: an optical scanner utilizing a prism described in "Automatic classification of fingerprint patterns" (Vol. CV 18, No. 2, 1982, pp.1-8, seminar material for Information Processing Society of Japan) or "Fingerprint information detection method using a prism: Comparing the total reflection method and the optical path separating method" (Vol. J68-D, No. 3, 1985, pp.414-415, Collected papers (D) by Denki Joho Tsushin Gakkai), a scanner employing a hologram described in "Individual identification apparatus using a holographic fingerprint sensor" (Vol. PRU 87, No. 31, 1987, pp.27-33, Technical report by Denki Joho Tsushin Gakkai), and a scanner employing ultrasonic waves described in "Improved image quality of live scan fingerprint scanners using acoustic backscatter measurements" (Proceedings of Biometric Consortium 8th Meeting, 1996), a semiconductor sensor scanner utilizing thermal sensing feature described in "Thermal imaging fingerprint technology" (Proceedings of Biometric Consortium 9th Meeting, 1997), and a semiconductor sensor scanner utilizing capacitance described in "A direct fingerprint reader" (Proceedings of CardTech/SecurTech, Vol. I: Technology, 1996, pp.271-279).

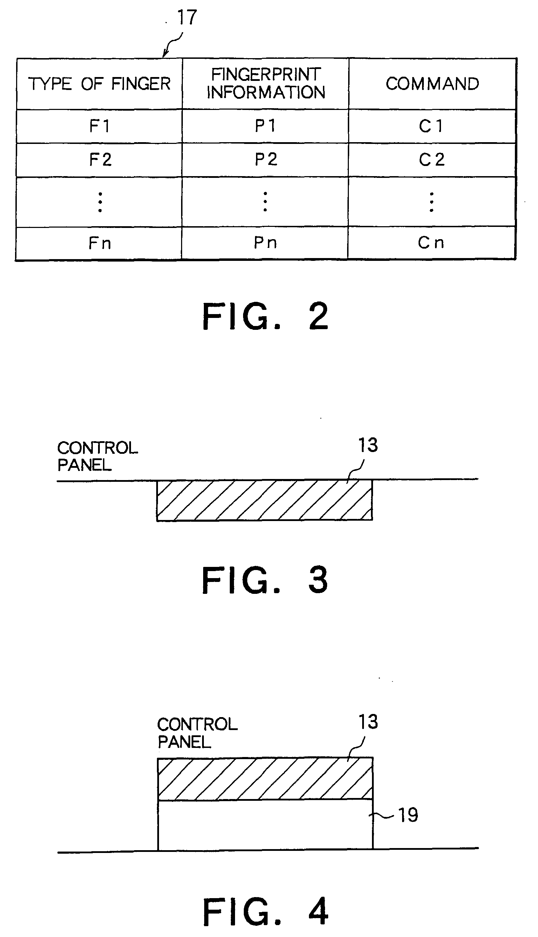

The fingerprint scanner 13 is mounted on a control panel for a user to touch it for operation. For instance, the fingerprint scanner 13 is buried in the control panel as shown in Fig. 3. In this case, use can be made as a touch sensitive button known in the art. Further, the fingerprint scanner 13 may be mounted on the surface of a button 19 as shown in Fig. 4 to allow it to be used in combination with the depression of the button 19. Further alternatively, the fingerprint scanner 13 may be mounted on the surface of an existing input device such as a slider or a dial so as to use it in combination with these existing devices, as in the case of the button.

The fingerprint recognition section 14 receives fingerprint image data read by the fingerprint scanner 13, converts the fingerprint image data into data in a format suited for fingerprint identification, and performs matching between the converted fingerprint image data and the fingerprint data of each finger stored in the storing section 17 so as to determine the type of the finger of the user that has touched the fingerprint scanner 13.

The fingerprint may be identified by any method as long as it permits a particular fingerprint to be identified from among multiple fingerprints, which have been registered in advance, when a fingerprint image to be identified is received. For instance, there is the minutiae method based on the structural positional relationship regarding the ending and branching points of fingerprint ridge lines as described in "Fingerprint identification system by making valley lines thinner" (Vol. J71-D, No. 2, 1988, pp.327-335, Collected papers (D) by Denki Joho Tsushin Gakkai), and the image matching method based on the density patterns of fingerprint images as described in "Fingerprint identification apparatus based on the pattern matching method" (Vol. PRU 88, No. 83, 1988, pp. 65-72, Technical report by Denki Joho Tsushin Gakkai). According to these fingerprint identification methods, the fingerprint image data received from the fingerprint scanner 13 is checked against each fingerprint information Pi, which has been registered beforehand in the storing section 17, and the fingerprint that indicates the highest matching score is presented as the identification result. It is possible to ensure positive input by rejecting the user input as invalid when the highest matching score is not more than a predetermined threshold value.

The command notifying section 15 obtains a command assigned to the particular type of finger, which has been determined by the fingerprint recognition section 14, from the correspondence table stored in the storing section 17, and then notifies the corresponding command to a target system main unit of the input device in accordance with the present invention.

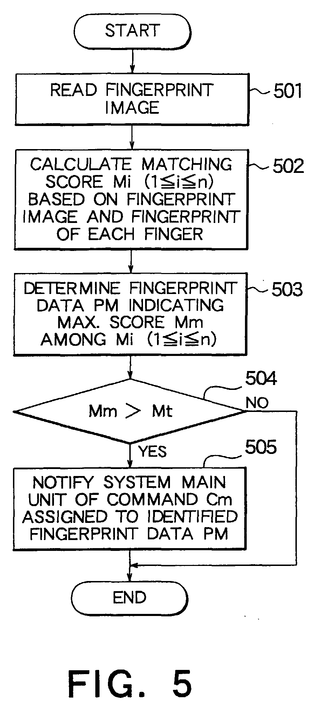

Referring to Fig. 5 in addition to Figs. 1 and 2, description will be made as regards operation of the input device.

When a finger of the user touches the fingerprint scanner 13, the fingerprint scanner 13 reads a user fingerprint image at a first step 501. The fingerprint scanner 13 outputs the read information as fingerprint image data to the fingerprint recognition section 14. Having received the fingerprint image data from the fingerprint scanner 13, the fingerprint recognition section 14 compares or collates the fingerprint image S with the fingerprint data Pi of each finger stored in the storing section 17 to calculate matching scores Mi between the fingerprint image S and the fingerprint data Pi at a second step 502. On carrying out the second step 502, the fingerprint recognition section 14 may be called a fingerprint collating section. Further, the fingerprint recognition section 14 determines, at a third step 503, fingerprint data Pm indicative of a highest matching score Mm among the determined matching scores Mi by referring to the storing section 17. In other words, one of the fingers is specified as a used finger. On carrying out the third step 503, a combination of the fingerprint recognition section 14 and the storing section 17 will be referred to as a finger specifying arrangement. Further, a combination of the fingerprint scanner 13, the fingerprint recognition section 14, and the storing section 17 is referred to as a fingerprint identifying arrangement which is for identifying, as an identified fingerprint, one of fingerprints of the fingers to produce an identification result representative of the identified fingerprint.

The third step 503 is followed by a fourth step 504 at which judgement is carried out about whether or not the matching score Mm is larger than the threshold value Mt. When the matching score Mm is smaller than the threshold value Mt, the fingerprint recognition section 14 decides that the type of the finger cannot be identified and terminates the processing without notifying the system main unit of any command. In this event, the fingerprint recognition section 14 will be referred to as a control arrangement.

When the matching score Mm is larger than the threshold value Mt, the fourth step 504 is followed by a fifth step 505 at which the command notifying section 15 refers to the storing section 17 to determine a command Cm that corresponds to fingerprint data Pm that has been identified. In other words, the command notifying section 15 determines, as a particular command, one of the commands in accordance with the identification result. Further, the command notifying section 15 notifies the command Cm to the system main unit 16. On determining the command Cm, the command notifying section 15 will be referred to as a command determining arrangement which is for determining, as a particular command, one of the commands in accordance with the identification result. A combination of the fingerprint recognition section 14, the command notifying section 15, and storing section 17 is referred to as a process designating arrangement which is for designating a process to be implemented by the system main unit 16.

According to the input device 10, the type of the finger of a user that has operated the input device 10 is identified by identifying the fingerprint so as to recognize the input made by the user by the fingerprint recognition. Hence, the user can make different inputs by using different fingers to operate the input device. This obviates the need of pressing the input device more than once (e.g. double click), even in a single input device. Therefore, an input can be accomplished with one depression. Furthermore, in the past, multiple input devices had to be provided on a control panel to permit multiple different types of inputs to be made by pressing the input device only once; the use of the present invention reduces the number of input devices required for the operation, permitting a minimized area occupied by the input devices.

While the present invention has thus far been described in connection with a single embodiment thereof, it will readily be possible for those skilled in the art to put this invention into practice in various other manners. For example, the type of fingers Fi may not be assigned to the commands Ci with the fingerprint data Pi being assigned to the commands Ci. The threshold determining section may be included in the finger print recognition section in place of being included in the storage device.

## Claims

1. An input device comprising:
fingerprint identifying means (14) for identifying, as an identifying fingerprint,the fingerprint of user's finger which is used in manipulating said input device; and
process designating means (15) connected to said fingerprint identifying means for notifying a system of a command bound to said identified fingerprint.

2. An input device adapted to determine a finger, which a user has used for operation, by identifying the fingerprint of the finger, and specify processing to be implemented by a system in accordance with an identification result.

3. An input device wherein a command is assigned in advance to a fingerprint so as to operate a system, a fingerprint of a user is identified to determine the command assigned to the identified fingerprint, and the determined command is notified to the system.

4. An input device comprising:
a fingerprint information storing section (17) for storing fingerprint information on each finger and a command assigned to each finger to operate a system;
a fingerprint scanner (13) for reading a fingerprint image of a finger that a user has used for operation;
fingerprint identifying means (14) for carrying out matching between a fingerprint image obtained by the fingerprint scanner and fingerprint information stored in the fingerprint information storing section in order to determine the figure that the user has used for the operation; and
command notifying means (15) which determines a command that corresponds to the type of finger identified by the fingerprint identifying means by referring to the fingerprint information storing section, and which notifies a target system of the command.

5. An input device according to Claim 4, wherein the fingerprint identifying means prepares a threshold value in advance, and if a result of the matching is the threshold value or less, then it decides that identification cannot be implemented.

6. An input device used for operating a system and adapted to fingers of a user, characterized by comprising:
fingerprint identifying means (13, 14, 17) for identifying, as an identified fingerprint, one of fingerprints of said fingers to produce an identification result representative of said identified fingerprint; and
process designating means (14, 15, 17) connected to said fingerprint identifying means and responsive to said identification result for designating a process to be implemented by said system.

7. An input device as claimed in claim 6, wherein said process designating means comprises:
finger specifying means (14, 17) connected to said fingerprint identifying means for specifying, as a used finger, one of the fingers in accordance with said identification result; and
means (15) connected to said finger specifying means for designating said process in accordance with said used finger.

8. An input device as claimed in claim 6, wherein said process designating means comprises:
command assigning means (17) for assigning commands in one-to-one correspondence of said fingerprints, each of said commands being used for operating said system;
command determining means (14) connected to said command assigning and said fingerprint identifying means for determining, as a particular command, one of said commands in accordance with said identification result; and
command notifying means (15) connected to said command determining means for notifying said particular command to said system.

9. An input device as claimed in claim 6, wherein said fingerprint identifying means comprises:
a storing section (17) for storing said commands, fingers of said user, and fingerprint data on said fingers in correspondence to one another, respectively;
a fingerprint scanner (13) for scanning each of said fingers on operation of said input device to produce a fingerprint image; and
fingerprint collating means (14) connected to said storing section and said fingerprint scanner for collating said fingerprint image with each of said fingerprint data to determine, as a used finger, one of the fingers, said process designating means being connected to said fingerprint collating means and designating said process in accordance with said used finger.

10. An input device as claimed in claim 9, further comprising:
threshold determining means (18) for determining a threshold value; and
control means (14) connected to said threshold determining and said fingerprint collating means for controlling operation of said fingerprint collating means in accordance with said threshold value.

11. An input method comprising the steps of:
identifying, as an identified fingerprint, a fingerprint of user's finger which is used in manipulating said input device; and
notifying a system of a command bound to said identified fingerprint.

12. An input method whereby to determine a finger, which a user has used for operation, by identifying a fingerprint, and to specify processing to be implemented by a system.

13. An input method comprising the steps of:
storing fingerprint information on each finger and a command assigned to each finger to operate a system in a fingerprint information storage device;
reading a fingerprint image of a finger that a user has used for operation;
carrying out matching between a fingerprint image that has been read and fingerprint information stored in the fingerprint information storage device in order to determine the figure that the user has used for the operation; and
determining a command that corresponds to the determined of finger by referring to the storage device, and notifying a target system of the command.

14. A method of inputting information to a system with operation by fingers of a user, said method comprising the steps of:
identifying, as an identified fingerprint, one of fingerprints of said fingers to produce an identification result representative of said identified fingerprint; and
designating, in response to said identification result, a process to be implemented by said system.

15. A method as claimed in claim 14, wherein the designating step comprises the steps of:
specifying, as a used finger, one of said fingers in accordance with said identification result; and
designating said process in accordance with said used finger.

16. A method as claimed in claim 14, wherein the designating step comprises the steps of:
assigning commands in one-to-one correspondence of said fingerprints, each of said commands being used for operating said system;
determining, as a particular command, one of said commands in accordance with said identification result; and
notifying said particular command to said system.

17. A method as claimed in claim 14, wherein the identifying step comprises the steps of:
storing said commands, fingers of said user, and fingerprint data on said fingers in correspondence to one another, respectively;
scanning each of said fingers on operation of said input device to produce a fingerprint image; and
collating said fingerprint image with each of said fingerprint data to determine, as a used finger, one of the fingers, the designating step designating said process in accordance with said used finger.

18. A method as claimed in claim 17, further comprising the steps of:
determining a threshold value; and
controlling operation of said fingerprint collating means in accordance with said threshold value.
